# Europäisches Patentamt
## European Patent Office
## Office européen des brevets

(19)

(11) Veröffentlichungsnummer: **0 036 487**
**B1**

(12) **EUROPÄISCHE PATENTSCHRIFT**

(51) Int. Cl.³: **G 01 N 31/16,** G 01 N 27/42

(45) Veröffentlichungstag der Patentschrift:
**20.06.84**

(21) Anmeldenummer: **81101144.4**

(22) Anmeldetag: **18.02.81**

(54) Pyridinfreies Karl-Fischer-Reagenz und Verfahren zur Bestimmung von Wasser mit Hilfe dieses Reagenzes.

(30) Priorität: **19.03.80 DE 3010436**

(43) Veröffentlichungstag der Anmeldung:
**30.09.81 Patentblatt 81/39**

(45) Bekanntmachung des Hinweises auf die Patenterteilung:
**20.06.84 Patentblatt 84/25**

(84) Benannte Vertragsstaaten:
**AT BE CH DE FR GB IT LI NL SE**

(56) Entgegenhaltungen:
**DE - B - 1 075 341**

**CHEMIE FÜR LABOR UND BETRIEB, 31. Jahrgang, Heft 12, 1980, Seite 565 E. SCHOLZ: "Karl Fischer-Reagenzien ohne Pyridin"**
**CHEMICAL ABSTRACTS, Band 80, Nr. 2, 14. Januar 1974, Seite 478, Nr. 10009a Columbus, Ohio, U.S.A. F.B. SHERMAN et al.: "Fischer reagent without pyridine"**
**ANALYTICAL CHEMISTRY, Band 28, Heft Nr. 7, Juli 1956, Seiten 1166-1168 A. JOHANSSON: "Application of Karl Fischer water method to oxidants, reductants, and amines"**
**FRESENIUS ZEITSCHRIFT FÜR ANALYTISCHE CHEMIE, Band 303, 1980, Seiten 203-207 Berlin, DE. E. SCHOLZ: "Karl Fischer-Reagentien ohne Pyridin"**

(73) Patentinhaber: **Merck Patent Gesellschaft mit beschränkter Haftung, Frankfurter Strasse 250, D-6100 Darmstadt (DE)**

(72) Erfinder: **Fischer, Wolfgang, Dr., Kröhweg 27, D-6100 Darmstadt (DE)**
Erfinder: **Krenn, Karl-Dieter, Zieglerstrasse 41, D-6102 Pfungstadt (DE)**

## Beschreibung

Die Erfindung betrifft ein pyridinfreies Karl-Fischer-Reagenz zur Bestimmung von Wasser, das aus einem Lösemittel für die zu untersuchende Probe und einem Titriermittel besteht sowie ein Verfahren zur Bestimmung von Wasser mit Hilfe dieses Reagenzes. Das Lösemittel enthält Schwefeldioxid und ein Amin in einem Lösungsmittel, das Titriermittel enthält Jod in einem Lösungsmittel.

Aus der Literatur ist eine Reihe von Vorschlägen bekannt, Pyridin im Karl-Fischer-Reagenz durch andere Substanzen zu ersetzen. In Anal. Chim. Acta 94, 395 (1977) wird Natriumacetat als Ersatz für Pyridin verwendet. Dieser Ersatz bringt jedoch gewisse Nachteile mit sich. Es bildet sich z. B. mit dem als Lösungsmittel verwendeten Alkohol Essigsäureester, wobei Wasser frei wird, das bei einer Wasserbestimmungsmethode naturgemäss stört.

Die Verwendung von Aminen anstelle von Pyridin wurde z. B. in J. Amer. Chem. Soc. 61, 2407 (1939) beschrieben.

Dabei wurde jedoch festgestellt, dass die Stabilität dieser Lösungen im Vergleich zu pyridinhaltigen Lösungen sehr schlecht ist und dass im Falle von Triäthanolamin die Zersetzung des Reagenzes schon bei der Herstellung kaum zu verhindern ist.

Auch in Anal. Chem. 28, 1166 (1956) wurde beschrieben, dass bei Ersatz von Pyridin durch Amine keine stabilen Endpunkte bei der Titration zu erhalten sind. Damit ergibt sich aus dem Stand der Technik, dass der Ersatz von Pyridin durch Amine nicht sinnvoll ist, weil diese Reagenzien entweder nicht haltbar sind oder falsche Resultate liefern.

Der Erfindung lag die Aufgabe zugrunde, ein pyridinfreies Karl-Fischer-Reagenz zur Verfügung zu stellen, das stabil ist und exakte Analysenergebnisse liefert.

Im herkömmlichen Karl-Fischer-Reagenz wird das Pyridin in drei- bis vierfach molarem Überschuss zum Schwefeldioxid eingesetzt. Wird dieses Verhältnis auch für andere basische Komponenten beibehalten, so ergeben sich instabile Endpunkte bei der Titration und das Reagenz ist unbrauchbar für massanalytische Wasserbestimmungen.

Überraschenderweise wurde gefunden, dass ein stabiles und exakte Endpunkte lieferndes Karl-Fischer-Reagenz erhalten werden kann, wenn ein bestimmtes molares Verhältnis von Amin zu Schwefeldioxid eingehalten wird.

Gegenstand der Erfindung ist ein pyridinfreies Karl-Fischer-Reagenz zur Bestimmung von Wasser, bestehend aus einem Lösemittel, enthaltend Schweldioxid und ein Amin in einem Lösungsmittel, und einem Titriermittel, enthaltend Jod in einem Lösungsmittel, das dadurch gekennzeichnet ist, dass das molare Verhältnis von Amin zu Schwefeldioxid etwa 2:1 bis etwa 1:1 beträgt.

Das pyridinfreie Karl-Fischer-Reagenz besteht demnach aus zwei Lösungen, einem Lösemittel und einem Titriermittel. Das Lösemittel enthält Schwefeldioxid und Amin in einem Lösungsmittel und dient zur Aufnahme der auf ihren Wassergehalt zu untersuchenden Probe. Das Titriermittel ist eine auf einen konstanten Titer eingestellte Lösung von Jod in einem Lösungsmittel.

Ferner betrifft die Erfindung ein Verfahren zur Bestimmung von Wasser mit Hilfe des genannten pyridinfreien Karl-Fischer-Reagenzes.

Geeignete Amine für das erfindungsgemässe Reagenz sind z. B. Äthanolamin, Diäthanolamin, Triäthanolamin, Morpholin, N-Methylmorpholin, Anilin, Dimethylanilin, Diäthylamin, Triäthylamin, Diisopropylamin, Tri-n-butylamin, Äthylendiamin, Diphenylamin usw., vorzugsweise Mono-, Di- und Triäthanolamin, wobei auch Gemische der genannten Amine verwendet werden können.

Als Lösungsmittel sowohl für das Löse- als auch für das Titriermittel eignen sich alle in der Literatur zu diesem Zweck beschrieben Lösungsmittel, vorzugsweise Alkohole und/oder Glykole, insbesondere niedere Alkohole wie Methanol, Äthanol, Propanol usw. sowie Äthylenglykol und Äthylenglykolmonoalkyläther. Die Lösungsmittel können einzeln oder in einem beliebigen Mischungsverhältnis verwendet werden. So ist es z. B. möglich, das Amin in einem Alkohol zu lösen und das Jod in einem Glykol oder beide in einem beliebigen Mischungsverhältnis von Alkoholen, Glykolen oder Mischungen beider Lösungsmitteltypen.

Mit dem erfindungsgemässen pyridinfreien Karl-Fischer-Reagenz kann der Endpunkt der massanalytischen Wasserbestimmung visuell, photometrisch oder elektrometisch (Dead-Stop-Methode, coulometrische Methode) bestimmt werden. Das Reagenz eignet sich sowohl für den Einsatz im Titrierautomaten als auch als Feldmethode, wobei die Feldmethode durch den Ersatz des Methanols durch die genannten Lösungsmittel mit niedrigen Dampfdruck überhaupt erst ermöglicht wurde.

Durch den Ersatz von Pyridin durch die genannten Amine ergeben sich eine Reihe von Vorteilen: Der Umschlag am Äquivalenzpunkt ist deutlicher als mit den herkömmlichen Karl-Fischer-Reagenzien, weil der Farbumschlag von farblos nach gelb anstatt von gelb nach braun erfolgt; das Reagenz ist weniger giftig, es ist insgesamt umweltfreundlicher und billiger.

Die Titration erfolgt generell unter Ausschluss von Luftfeuchtigkeit. Bei der visuellen Titration titriert man auf den Farbumschlag von farblos nach gelb. Visuelle und photometrische Titration werden jedoch unmöglich, wenn die zu analysierende Lösung eine starke Eingenfarbe besitzt. Bevorzugt ist deshalb heute die elektrometrische Titration, insbesondere die sogenannte Dead-Stop-Methode. Dieses Verfahren beruht auf einer bewusst erzeugten Polarisation an zwei gleichen Platinelektroden. Beim Anlegen einer geringen Potentialdifferenz wird die durch die Polarisation entstehende Spannung kompensiert und der Stromfluss unterbrochen. Der Endpunkt der Titration wird durch einen starken Ausschlag des Galvanometers mit anschliessendem unverändertem Verharren angezeigt, was auf dem scharfen Übergang von Polarisation oder Depolarisation einer Elektrode zur vollständigen Depolarisation oder Polarisation beider Elektroden beruht.

Die Erfindung wird durch die folgenden Beispiele näher erläutert.

*Beispiel 1*

Zur Herstellung des Lösemittels und des Titriermittels wurden die jeweiligen Substanzen in dem entsprechenden Lösungsmittel gelöst.

a) Lösemittel
32,0 g Schwefeldioxid (0,5 M) und
149,2 g Triäthanolamin (1,0 M) in
1000 ml Methanol
b) Titriermittel
50 g Jod in
1000 ml Methanol

Die auf ihren Wassergehalt zu untersuchende Substanz wurde je nach dem geschätzten Wassergehalt in 20 ml des Lösemittels gelöst und mit dem Titriermittel unter ständigem Rühren unter Ausschluss von Luftfeuchtigkeit bis zum Endpunkt titriert.

*Beispiel 2*

Es wurden folgende Karl-Fischer-Lösungen hergestellt:
a) Lösemittel
32,0 g Schwefeldioxid (0,5 M) und
105,1 g Diäthanolamin (1,0 M) in
1000 ml Äthylenglykolmonomethyläther
b) Titriermittel
50 g Jod in
1000 ml Äthylenglykolmonomethyläther

Mit diesen Lösungen wurden die gleichen Ergebnisse erzielt wie mit den Lösungen nach Beispiel 1. Die Ergebnisse änderten sich auch nicht nach teilweisem oder vollständigem Ersatz des Äthylenglykolmonomethyläthers durch Methanol oder Propanol.

*Beispiel 3*

Zur Durchführung einer coulometrischen Wasserbestimmung wurden folgende Lösungen verwendet:

a) Kathoden-Lösung
64,0 g Schwefeldioxid (1,0 M) und
149,2 g Triäthanolamin (1,0 M) in
1000 ml Methanol
b) Anoden-Lösung
analog, jedoch mit Zusatz von 5 bis 10 g Jod.

## Patentansprüche

1. Pyridinfreies Karl-Fischer-Reagenz zur Bestimmung von Wasser, bestehend aus einem Lösemittel, enthaltend Schwefeldioxid und ein Amin in einem Lösungsmittel, und einem Titriermittel, enthaltend Jod in einem Lösungsmittel, dadurch gekenzeichnet, dass das molare Verhältnis von Amin zu Schwefeldioxid etwa 2:1 bis etwa 1:1 beträgt.

2. Pyridinfreies Karl-Fischer-Reagenz nach Anspruch 1, dadurch gekenzeichnet, dass das Amin Mono-, Di- und/oder Triäthanolamin ist.

3. Verfahren zur Bestimmung von Wasser mit Hilfe des pyridinfreien Karl-Fischer-Reagenzes nach den Ansprüchen 1 und 2.

## Claims

1. Pyridine-free Karl-Fischer reagent for the determination of water, which consist of a solvent solution containing sulfur dioxide and an amine in a solvent, and of a titrating agent containing iodine in a solvent, characterised in that the molar ratio of amine to sulfur dioxide is about 2:1 to about 1:1.

2. Pyridine-free Karl-Fischer reagent according to Claim 1, characterised in that the amine is mono-, di- and/or tri-ethanolamine.

3. Process for the determination of water with the aid of the Pyridine-free Karl-Fischer reagent according to Claims 1 and 2.

## Revendications

1. Réactif de Karl Fischer sans pyridine pour le dosage de l'eau, consistant en un solvant contenant de l'anhydride sulfureux et une amine dans un solvant, et un agent de titrage, contenant de l'iode dans un solvant, caractérisé en ce que le rapport molaire amine/anhydride sulfureux va d'environ 2:1 à environ 1:1.

2. Réactif de Karl Fischer sans pyridine selon la revendication 1, caractérisé en ce que l'aime est la mono-, la di- et/ou la tri-éthanolamine.

3. Procédé pour le dosage de l'eau du réactif de Karl Fischer sans pyridine selon les revendications 1 et 2.